# EUROPÄISCHE PATENTSCHRIFT

(11) **EP 1 917 168 B1**
(45) Veröffentlichungstag und Bekanntmachung des Hinweises auf die Patenterteilung: **28.07.2010**
(21) Anmeldenummer: 06792657.6
(22) Anmeldetag: 02.08.2006
(51) Int. Cl.: B60T 8/32, B60T 8/26, B62L 3/08

(54) **VERFAHREN UND BREMSANLAGE ZUR DRUCKMODULATION VON BREMSDRÜCKEN BEI KRAFTRÄDERN**
METHOD AND BRAKING SYSTEM FOR MODULATING BRAKE PRESSURES ON MOTORCYCLES
PROCEDE ET SYSTEME DE FREINAGE POUR MODULER DES PRESSIONS DE FREINAGE SUR DES MOTOS

(30) Priorität: 23.08.2005 DE 102005039975; 02.08.2006 DE 102006036383
(43) Veröffentlichungstag der Anmeldung: 07.05.2008
(73) Patentinhaber: Continental Teves AG & Co. oHG, 60488 Frankfurt am Main (DE)
(72) Erfinder: BURKHARD, Dieter, 55411 Bingen-Büdesheim (DE); GRONAU, Ralph, 35083 Wetter (DE)
(74) Vertreter: Brand, Markus
(86) Internationale Anmeldenummer: PCT/EP2006/064979
(87) Internationale Veröffentlichungsnummer: WO 2007/023071

(56) Entgegenhaltungen:
- EP-A2- 1 277 635
- WO-A-93/22169
- WO-A-96/10507
- DE-A1- 3 323 402
- DE-A1- 10 209 984
- JP-A- 2000 071 963

## Beschreibung

Die Erfindung betrifft ein Verfahren gemäß Oberbegriff von Anspruch 1 sowie eine Kraftradbremsanlage gemäß Oberbegriff von Anspruch 10.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Traditionell haben Krafträder je ein Betätigungselement für jeden der beiden Bremskreise. Meist wird die Vorderradbremse durch einen "Handbremshebel" und die Hinterradbremse durch einen "Fußbremshebel" betätigt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises eingebremst wird. Durch Betätigen eines einzigen Betätigungselements können also beide Bremsen angesteuert werden. Werden bei Betätigung des Hand- und des Fußbremshebels jeweils beide Bremsen angesteuert, so bezeichnet man dies als Vollintegralbremse. Es sind jedoch auch Kombinationen möglich, bei denen ein Bremshebel auf ein Rad und der andere Bremshebel auf beide Räder wirkt (Teilintegralbremse). Integralbremsanlagen für Krafträder sind beispielsweise aus der DE 38 03 563 A1 und DE 103 16 351 A1 bekannt.

Bei Krafträdern mit Integralfunktion erfolgt aufgrund der Betätigung eines einzigen Betätigungselements (z.B. Handbremshebel und/oder Fußbremshebel) die automatische Bremskraftverteilung bzw. die Bremsdruckverteilung zwischen Vorderrad und Hinterrad entweder durch eine feste Hydraulikverschaltung, mittels welcher die Bremskraftverteilung in einem vorgegebenen Verhältnis unveränderbar vorgegeben ist, oder über eine Elektronik, mittels welcher die vorgegebene Bremskraftverteilung gesteuert wird.

Aus der JP 2000071963 A ist ein Bremssystem für Motorräder bekannt, welches die Funktionalität von ABS und Integralbremse gewährleistet. Die Bremsanlage weist einen hydraulisch betätigbaren Vorderrad- und Hinterradbremskreis auf, in denen gemeinsam als auch unabhängig voneinander über einen fuß- und handbetätigten Hauptbremszylinder Bremsdruck in den Radbremsen aufgebaut werden kann. Zur Bremsschlupfregelung (z.B. Antiblockierfunktion oder elektronische Bremskraftverteilung) sind im Vorderrad- als auch im Hinterradbremskreis elektromagnetisch aktivierbare Ein- und Auslassventile sowie eine von einem Elektromotor antreibbare zweikreisige Pumpe eingesetzt. Ferner sind außer den Ein- und Auslassventilen und der Pumpe zusätzlich elektrisch betätigbare Trenn- und Umschaltventile in den beiden Bremskreisen vorhanden, um bei manueller Betätigung eines der beiden Hauptbremszylinders auch Bremsdruck in dem nicht manuell betätigten Bremskreis elektrohydraulisch aufbauen zu können (Integralfunktion), wozu die Pumpe und das Trenn- und Umschaltventil im nicht manuell betätigten Bremskreis elektrisch aktiviert werden.

Ein Nachteil dieser Bremsanlage ist, dass bei einer Bremsschlupfregelung (z.B. Antiblockierfunktion (ABS) oder elektronische Bremskraftverteilung (EBV)) der Fahrer bei einer Betätigung des Hand- bzw. Fußbremshebels, der zu dem Bremskreis korrespondiert, welcher zuvor durch die Integralfunktion gebremst wurde, einen "harten" Bremshebel spürt. Dies liegt darin begründet, dass bei der Bremsschlupfregelung die Druckmodulation über die Radventile (Ein- und Auslassventil) erfolgt und das Einlassventil während der Regelung meistens geschlossen ist, so dass der Fahrer bei Betätigung des Bremshebels einen Widerstand spürt.

Der Erfindung liegt daher die Aufgabe zugrunde, ein alternatives Verfahren zur Druckmodulation von Bremsdrücken in einer Kraftradbremsanlage mit Antiblockierfunktion und mit Integralbremsfunktion anzugeben, welches den oben genannten Nachteil vermeidet.

Diese Aufgabe wird erfindungsgemäß durch das Verfahren gemäß Anspruch 1 gelöst.

Der Erfindung liegt der Gedanke zugrunde, im Falle einer Bremsschlupfregelung die Bremsdruckmodulation in dem Bremskreis, welcher durch die Integralfunktion aktiv mit Bremsdruck beaufschlagt wird, über die Umschalt- und Trennventile zu steuern oder zu regeln anstatt über die Ein- und Auslassventile.

In Verallgemeinerung wird erfindungsgemäß unter einer "manuellen" Betätigung nicht nur die Betätigung mit einer Hand sondern auch die Betätigung mit einem Fuß verstanden.

Unter einer kritischen Bremsung wird erfindungsgemäß eine Bremsung verstanden, bei welcher eine schnelle Bremsdruckregelung notwendig ist, um eine sichere Bremsung und/oder einen optimalen Bremsweg zu gewährleisten. Dies kann beispielsweise bei einer Starkbremsung (Gefahrenbremsung) oder bei einer plötzlichen Änderung des Straßenreibwertes gegeben sein.

In einer bevorzugten Ausführungsform des erfindungsgemäßen Verfahrens wird bei einer Bremsschlupfregelung ein Halten des Bremsdruckes in dem Bremskreis, welcher durch die Integralfunktion gebremst wird, dadurch erreicht, dass das Umschaltventil geschlossen wird.

Ein Abbau des Bremsdrucks wird bei einer Bremsschlupfregelung in dem Bremskreis, welcher durch die Integralfunktion gebremst wird, bevorzugt durch ein Öffnen des Trennventils, besonders bevorzugt durch ein vollständiges Öffnen des Trennventils, erreicht. Bei einem analogen Ventil ist es auch besonders bevorzugt, dass nur eine teilweise Öffnung des Trennventils durchgeführt wird.

Ein nach erfolgtem Halten oder Abbau des Bremsdrucks durchzuführender Aufbau des Bremsdrucks wird bevorzugt dadurch realisiert, dass das Trennventil geschlossen und das Umschaltventil geöffnet wird.

Die Bremsschlupfregelung anhand des Umschaltventils und/oder des Trennventils wird bevorzugt abgebrochen und eine "normale" Bremsschlupfregelung, besonders bevorzugt eine ABS-Bremsung, anhand der Ein- und Auslassventile durchgeführt, wenn es sich um eine kritische Bremsung handelt.

In einer weiteren bevorzugten Ausführungsform wird eine kritische Bremsung in Abhängigkeit des Verhaltens des Kraftradführers oder in Abhängigkeit von Fahrzeugbetriebsparametern erkannt. Dabei wird besonders bevorzugt der Schlupf eines Rades, ganz besonders bevorzugt der Schlupf des integralgebremsten Rades, herangezogen. Es ist auch besonders bevorzugt, die Bremsschlupfregelung anhand des Umschaltventils und/oder des Trennventils dann abzubrechen, wenn der Fahrer an dem bisher integralgebremsten Rad manuell einbremst oder ganz besonders bevorzugt stark manuell einbremst, so dass das Rad in eine ABS-Regelung übergeht.

Außerdem ist die Bremsschlupfregelung, bei welcher eine Bremsdruckmodulation über das Umschaltventil und/oder das Trennventil gesteuert oder geregelt wird, bevorzugt eine Regelung zur elektronischen Bremskraftverteilung.

Die Erfindung betrifft auch eine Kraftradbremsanlage, in welcher ein vorstehend beschriebenes Verfahren durchgeführt wird.

Weitere bevorzugte Ausführungsformen der Erfindung ergeben sich aus den Unteransprüchen und der nachfolgenden Beschreibung anhand einer Figur.

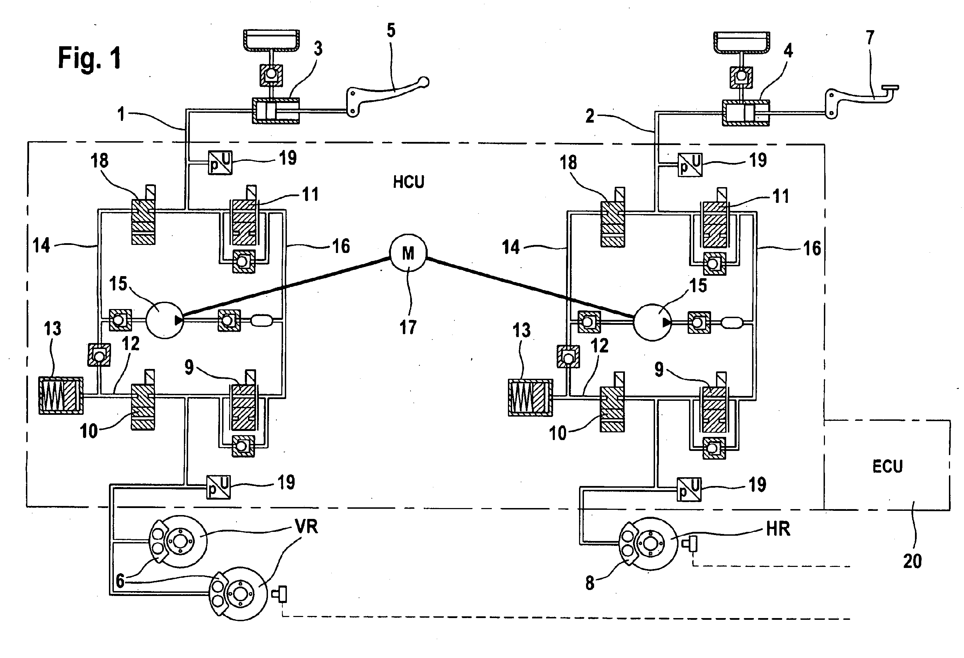

Es zeigt
- Fig. 1: schematisch eine Integralbremsanlage eines Motor- rades zur Durchführung eines erfindungsgemäßen Verfahrens.

In Fig. 1 ist eine Integralbremsanlage für ein Kraftrad schematisch dargestellt. Diese besteht aus zwei Bremskreisen 1, 2, einem für das Vorderrad VR und einem für das Hinterrad HR mit jeweils einem Hauptbremszylinder 3, 4. Mit einem Handbremshebel 5 betätigt der Fahrer direkt die Vorderradbremse 6 und mit einem Fußpedal 7 wird die Hinterradbremse 8 betätigt.

Zur Bremsschlupfregelung sind sowohl im Vorderrad- als auch Hinterradbremskreis 1, 2 elektromagnetisch betätigbare Ein- und Auslassventile 9, 10 angeordnet, wobei jeweils ein in Grundstellung geöffnetes Einlassventil 9 in die Bremsleitung des Vorder- und des Hinterradbremskreises 1, 2 eingesetzt ist, welche den jeweils zugehörigen Hauptbremszylinder 3, 4 mit der Vorderrad- oder der Hinterradbremse 6, 8 über das in Grundstellung geöffnete Trennventil 11 verbindet. Das in Grundstellung geschlossene Auslassventil 10 ist jeweils in eine Rücklaufleitung 12 eines jeden Bremskreises eingesetzt, welche die Vorder- oder Hinterradbremse 6, 8 mit jeweils einem Niederdruckspeicher 13 und dem Saugpfad 14 einer zweikreisig aufgeteilten Pumpe 15 verbindet, die nach dem Rückförderprinzip arbeitet. Die Pumpe 15 steht druckseitig mit den Bremsleitungen 16 beider Bremskreise in Verbindung, sodass in einer Bremsschlupfregelphase eine bedarfsgerechte Rückförderung des jeweils von der Vorder- bzw. Hinterradbremse 6, 8 abgelassenen Bremsflüssigkeitsvolumens in die Bremsleitungen 16 beider Bremskreise gewährleistet ist. Die Pumpkolben der beiden Pumpenkreise werden gemeinsam von einem Elektromotor 17 angetrieben.

Beide Bremskreise 1, 2 sind entsprechend ihrem schaltungstechnischen Aufbau gemeinsam als auch unabhängig voneinander betätigbar, mit der Besonderheit, dass beispielsweise bei einer manuellen Betätigung des am Vorderradbremskreis 1 angeschlossenen Hauptbremszylinders 3 nicht nur ein Bremsdruckaufbau in der Vorderradbremse 6, sondern gleichzeitig auch ein elektrohydraulischer Bremsdruckaufbau in der Hinterradbremse 8 erfolgt, indem der Elektromotor 17 die Pumpe 15 in Betrieb setzt, sobald infolge der im Hinterradbremskreis 2 elektrisch initiierten Offenstellung des Umschaltventils 18 die Pumpe 15 Druckmittel vom Hauptbremszylinder 4 entnimmt und zur Hinterradbremse 8 fördert, während das Trennventil 11 im Hinterradbremskreis 2 die Pumpendruckseite vom Hauptbremszylinder 4 trennt.

Das vorgenannten Betätigungsbeispiel lässt sich natürlich auch umkehren, indem abhängig von der manuellen Betätigung des an der Hinterradbremse 2 angeschlossenen Hauptbremszylinders 4 nach gleichem Schema eine elektrohydraulisch initiierte Bremsung an der Vorderradbremse 6 ausgelöst wird. Daraus folgt, dass bei Betätigung eines der beiden Hauptbremszylinder 3, 4 der jeweils vom Fahrer nicht betätigte Bremskreis quasi elektrohydraulisch fremdangesteuert durch die zweikreisige Pumpe 15 unter Druck gesetzt wird, sodass bei einer Einzelbetätigung eines der beiden Hauptbremszylinder immer beide Bremskreise aktiv zur Bremsverzögerung beitragen (Vollintegralbremse).

Zur Erfassung der von den Hauptbremszylindern 3, 4 in die Bremskreise 1, 2 eingesteuerten Drucke werden in der Regel Drucksensoren 19 verwendet. Zur Analogregelung der Einlassventile 9 sind beide Bremskreise 1, 2 zusätzlich mit zwei den Radbremsdruck erfassenden Drucksensoren 19 versehen. Zur Auswertung der Drucksensorsignale ist eine Logikschaltung in einem elektronischen Steuergerät 20 vorgesehen, in dem abhängig vom Auswerteergebnis der Drucksensorsignale mittels der elektrisch betätigbaren Pumpe 15 ein Hydraulikdruck erzeugt wird.

Für die Druckmodulation in Rahmen einer schlupfgeregelten Bremsung (ABS/EBV-Regelung) gilt nach dem Stand der Technik folgendes:
- Eine Blockierneigung des Vorder- VR bzw. des Hinterrades HR wird mittels Raddrehzahlsensoren und deren Signalauswertung im Steuergerät 20 sicher erkannt. Das im Vorderrad- bzw. im Hinterradbremskreis 1, 2 angeordnete Einlassventil 9 wird über das Steuergerät 20 elektromagnetisch geschlossen, um einen weiteren Druckaufbau an der Vorderrad- bzw. Hinterradbremse 6, 8 zu unterbinden.
- Soll zur Reduzierung der Blockierneigung zusätzlich ein weiterer Druckabbau im Vorderrad- bzw. Hinterradbremskreis 1, 2 durchgeführt werden, so wird dies durch das Öffnen des jeweils mit dem Niederdruckspeicher 13 verbindbaren, normalerweise stromlos geschlossenen Auslassventil 10 erreicht. Das Auslassventil 10 wird geschlossen, sobald die Radschlupf wieder über ein bestimmtes Maß hinaus anwächst. In der Druckabbauphase bleibt das entsprechende Einlassventil 9 geschlossen, so dass sich der im Vorderrad- bzw. Hinterradbremskreis 1, 2 erzeugte Hauptbremszylinderdruck nicht auf die Vorderrad- bzw. Hinterradbremse 6, 8 fortpflanzen kann.
- Wenn die ermittelten Schlupfwerte wieder einen Druckaufbau an der Vorderrad- bzw. Hinterradbremse 6, 8 erlauben, wird das Einlassventil 9 entsprechend der Anforderung des im Steuergerät 20 integrierten Schlupfreglers zeitlich begrenzt geöffnet. Das für den Druckaufbau erforderliche Hydraulikvolumen wird von der Pumpe 15 zu Verfügung gestellt.

Zur Erläuterung eines Ausführungsbeispiels eines erfindungsgemäßen Verfahrens wird im Folgenden von der in Fig. 1 dargestellten Integralbremsanlage ausgegangen. Das erfindungsgemäße Verfahren lässt sich jedoch auch in anderen Kraftradbremsanlagen, z.B. Teilintegralbremsanlagen, durchführen. Außerdem wird zur Vereinfachung im Folgenden davon ausgegangen, dass der Fahrer nur den Handbremshebel 5 betätigt. Das beispielgemäße Verfahren lässt sich jedoch analog bei Betätigung des Fußbremshebels 7 oder beider Bremshebel durchführen.

Entsprechend der obigen Ausführungen wird bei einer Kraftradbremsanlage mit Integralfunktion das Bremsdruckniveau an dem nicht durch den Fahrer manuell gebremsten Rad, z.B. dem Hinterrad HR, über eine (z.B. im elektronischen Steuergerät 20) abgelegte Bremskraftverteilung bestimmt und es wird aktiv ein entsprechender Bremsdruck in dem Hinterradbremskreis 2 eingesteuert. Hierzu wird bei geschlossenem Trenn- und Auslassventil 11, 10 durch die Pumpe 15 Bremsflüssigkeit vom Hauptzylinder 4 über das geöffnete Umschalt- und Einlassventil 18, 9 zur Hinterradbremse 8 gefördert.

Die optimale Bremsdruckverteilung (Hinterradbremsdruck im Vergleich zum Vorderradbremsdruck) ist stark vom Beladungszustand des Fahrzeuges abhängig. Da der Beladungszustand nur sehr schwer genau feststellbar ist, kann es zu Situationen kommen, in welchen es durch den über die Integralbremsfunktion eingesteuerten aktiven Druckaufbau zu einem Überbremsen des Rades HR kommt. Hierdurch wird dann eine Bremsschlupfregelung (ABS und/oder EBV) an diesem Rad HR ausgelöst. Die entsprechend dem Stand der Technik im Rahmen einer ABS/EBV-Regelung durchgeführten Druckmodulationen erfolgen, wie oben beschrieben, über die Radventile (Einlassventil 9 und Auslassventil 10).

Bremst der Fahrer während der ABS/EBV-Regelung manuell an dem integralgebremsten Rad HR ein, so führt dies zu einem "harten" Fußbremshebel 7, da das Einlassventil 9 während einer ABS/EBV-Regelung meistens geschlossen ist. Des Weiteren wird die Ansteuerung der Pumpe 15 (z.B. die Pumpendrehzahl) im Rahmen der ABS-Regelung über den Füllstand der Niederdruckspeicher 13 bestimmt. Somit wird ein exaktes Dosieren des Druckaufbaus über die Pumpe 15 erschwert.

Entsprechend des beispielsgemäßen Verfahrens (EBV/ABS-Sonderregelungsmodus) werden die oben genannten Nachteile dadurch verhindert, dass in dem Bremskreis 2, welcher durch die Integralfunktion gebremst wird, bei einer Bremsschlupfregelung (ABS/EBV-Regelung) eine Druckmodulation nur über eine Regelung der Umschalt- und Trennventile 18, 11 erfolgt. Das Einlassventil 9 im Hinterradbremskreis bleibt bei diesem EBV/ABS-Sonderregelungsmodus ständig geöffnet. Das Auslassventil 10 bleibt ständig geschlossen, wodurch es zu keiner Befüllung des entsprechenden Niederdruckspeichers 13 kommt.

Soll im Rahmen des Sonderregelungsmodus der Bremsdruck in dem durch die Integralfunktion aktiv gebremsten Hinterradbremskreis 2 gehalten werden, so wird beispielsgemäß das Umschaltventil 18 geschlossen. Die Limitierung des aktiven Druckaufbaus kann über die Beobachtung des Schlupfverhaltens des Rades HR erfolgen. Diese Schlupfüberwachung erfolgt nach dem aus dem PKW bekannten EBV-Prinzip: dabei wird der Radschlupf mit einer Schwelle verglichen und der Bremsdruckaufbau gestoppt (Halten des Bremsdruckes), wenn diese Schwelle erreicht ist.

Soll dann bei Erreichen einer EBV-Druckabbauschwelle, d.h. wenn der Radschlupf am Hinterrad HR im Rahmen des EBV-Regelungsverfahrens einen bestimmten Schwellenwert erreicht, ein Bremsdruckabbau im Hinterradbremskreis 2 eingesteuert werden, so wird der Druck in der Radbremse 8 beispielsgemäß über das Trennventil 11 reduziert, indem dieses ganz oder teilweise geöffnet wird. Hierdurch kann Bremsflüssigkeit von der Radbremse 8 über das Einlass- und Trennventil 9, 11 in den Hauptbremszylinder 4 strömen. Das Trennventil 11 kann hierbei ein digitales Ventil oder auch ein analoges Ventil sein. Der Druckabbau in einem analogen Modus bietet den Vorteil einer genauen Druckeinstellung und eines hohen Komforts.

Auch eine höhere Raddynamik, die zum Überschreiten der ABS-Eintrittschwellen führt, kann durch einen Druckabbau über das Trennventil 11 ausgeregelt werden. Der anschließende Druckaufbau, der bei geschlossenem Trennventil 11 und geöffnetem Umschaltventil 18 über die Pumpe 15 erfolgt, führt zu einer im Vergleich zur ABS-Regelung über die Radventile ("normales" ABS) niederfrequenten ABS-Regelung, wobei weitere Druckabbau-Phasen über die EBV-Kriterien eingesteuert werden. Dabei findet der Druckabbau weiterhin über das Trennventil 11 statt.

Das Auslösen einer "normalen" ABS-Regelung kann über das manuelle Einbremsen des Fahrers an dem durch die Integralfunktion aktiv gebremsten Hinterradbremskreis 2 (z.B. anhand des Tandemhauptzylinder-Drucks) erkannt werden und führt zum sofortigen Abbrechen des EBV/ABS-Sonderregelungsmodus, wenn sich das entsprechende Rad in einer kritischen Schlupfsituation befindet.

Der EBV/ABS-Sonderregelungsmodus bietet den Vorteil einer niederfrequenten Regelung, die wenige Rückwirkungen (Pendelbewegungen durch Aufstellmomente) auf das Fahrzeug, speziell bei Bremsungen in der Kurve, hat. Des Weiteren ist der Fahrer immer in der Lage, an dem intergralgeregelten Rad durch Betätigung des entsprechenden Bremshebels manuell einzubremsen. Ein weiterer Vorteil ist das Nichtbefüllen der Niederdruckspeicher 13, sodass bei einer anschließenden "normalen" ABS-Regelung über die Ein- und Auslassventile das volle Niederdruckspeichervolumen zur Verfügung steht.

Der EBV/ABS-Sonderregelungsmodus wird bei Vollintegral-Systemen für das Hinter- HR und das Vorderrad VR verwendet oder auch nur für ein Rad, z.B. das Hinterrad HR. Der EBV/ABS-Sonderregelungsmodus wird bei Teilintegral-Systemen für das Rad verwendet, welches durch die Integralfunktion aktiv mit Druck beaufschlagt wird, z.B. das Hinterrad HR.

In einer bevorzugten Ausführungsform wird der Sonderregelungsmodus mit Bremsdruckmodulation über die Umschalt- und Trennventile nur zur Regelung nach EBV-Schwellen, welche geringer sind als die ABS-Schwellen, verwendet. Das Rad wird so in der EBV-Regelung gehalten. Ein Vorteil ist, dass so dem Fahrer ein komfortables Einbremsen ermöglicht wird. Befindet sich das System bereits in einer ABS-Regelung, so sollte kein weiterer Druckaufbau über die Trennventile bzw. deren Rückschlagventile zugelassen werden, da dies zu einer kritischen Situation führen kann. Die Einlassventile müssen dann also geschlossen werden ("normale" ABS-Regelung über die Radventile). Durch die Verwendung des Sonderregelungsmodus nur in der EBV-Regelung mit ihren "geringen" EBV-Schwellen wird eine hinreichende Verzögerung erreicht.

## Patentansprüche

1. Verfahren zur Druckmodulation von Bremsdrücken in einer Kraftradbremsanlage mit Antiblockierfunktion und mit Integralbremsfunktion, in welcher zur Bremsschlupfregelung in einem Vorderradbremskreis (1) und einem Hinterradbremskreis (2) je Ein- und Auslassventile (9, 10) vorhanden sind, und wobei durch die Integralbremsfunktion mittels einer Pumpe (15) und mindestens je eines Trenn- und Umschaltventils (11, 18) in mindestens einem der Bremskreise (1, 2) ein aktiver Druckaufbau in einem anderen als dem durch den Kraftradführer betätigten Bremskreis durchgeführt wird, wobei das Trennventil (11) zwischen dem Hauptbremszylinder (3, 4) des Bremskreises (1, 2) und der Druckseite der Pumpe (15) und das Umschaltventil (18) zwischen dem Hauptbremszylinder (3, 4) und der Saugseite der Pumpe (15) angeordnet ist, **dadurch gekennzeichnet, dass** in dem Bremskreis (1, 2), welcher durch die Integralfunktion gebremst wird, bei einer Bremsschlupfregelung eine Bremsdruckmodulation über das Umschaltventil (18) und/oder das Trennventil (11) gesteuert oder geregelt wird.

2. Verfahren nach Anspruch 1, **dadurch gekennzeichnet, dass** die Art und Weise der Bremsdruckmodulation in dem Bremskreis (1, 2), welcher durch die Integralfunktion gebremst wird, in Abhängigkeit eines Schlupfes eines Rades (VR, HR), insbesondere des Schlupfes des durch die Integralfunktion gebremsten Rades, erfolgt.

3. Verfahren nach Anspruch 1 oder 2, **dadurch gekennzeichnet, dass** bei einer Bremsschlupfregelung in dem Bremskreis (1, 2), welcher durch die Integralfunktion gebremst wird, zum Halten des Bremsdrucks ein Schließen des Umschaltventils (18) durchgeführt wird.

4. Verfahren nach mindestens einem der Ansprüche 1 bis 3, **dadurch gekennzeichnet, dass** bei einer Bremsschlupfregelung in dem Bremskreis (1, 2), welcher durch die Integralfunktion gebremst wird, zum Abbau des Bremsdrucks eine Öffnung, insbesondere eine teilweise Öffnung, des Trennventils (11) durchgeführt wird.

5. Verfahren nach Anspruch 3 oder 4, **dadurch gekennzeichnet, dass** nach erfolgtem Halten oder Abbau des Bremsdrucks zum Aufbau des Bremsdrucks das Trennventil (11) geschlossen und das Umschaltventil (18) geöffnet wird.

6. Verfahren nach mindestens einem der Ansprüche 1 bis 5, **dadurch gekennzeichnet, dass** bei einer Bremsschlupfregelung in dem Bremskreis (1, 2), welcher durch die Integralfunktion gebremst wird, die Bremsdruckmodulation anhand des Umschalt- und/oder Trennventils (11, 18) abgebrochen wird und eine Bremsdruckmodulation anhand der Ein- und Auslassventile (9, 10) durchgeführt wird, wenn es sich um eine kritische Bremsung handelt.

7. Verfahren nach Anspruch 6, **dadurch gekennzeichnet, dass** eine Erkennung einer kritischen Bremsung in Abhängigkeit des Verhaltens des Kraftradführers oder in Abhängigkeit von Fahrzeugbetriebsparametern, insbesondere des Schlupfes eines Rades (HR, VR), erfolgt.

8. Verfahren nach Anspruch 7, **dadurch gekennzeichnet, dass** eine kritische Bremsung erkannt wird, wenn der Schlupf eines Rades größer ist als ein im Rahmen der Antiblockierfunktion vorgegebener Schwellenwert.

9. Verfahren nach mindestens einem der Ansprüche 1 bis 8, **dadurch gekennzeichnet, dass** die Bremsschlupfregelung, bei welcher eine Bremsdruckmodulation über das Umschaltventil (18) und/oder das Trennventil (11) gesteuert oder geregelt wird, eine Regelung zur elektronischen Bremskraftverteilung ist.

10. Kraftradbremsanlage mit einem Antiblockiersystem und mit einer Integralbremsfunktion, in welcher zur Bremsschlupfregelung in einem Vorderradbremskreis (1) und einem Hinterradbremskreis (2) je Ein- und Auslassventile (9, 10) vorhanden sind, und wobei durch die Integralbremsfunktion mittels einer Pumpe (15) und mindestens je eines Trenn- und Umschaltventils (11, 18) in mindestens einem der Bremskreise (1, 2) ein aktiver Druckaufbau in einem anderen als dem durch den Kraftradführer betätigten Bremskreis durchgeführt wird, wobei das Trennventil (11) zwischen dem Hauptbremszylinder (3, 4) des Bremskreises (1, 2) und der Druckseite der Pumpe (15) und das Umschaltventil (18) zwischen dem Hauptbremszylinder (3, 4) und der Saugseite der Pumpe (15) angeordnet ist, und welche ein elektronisches Steuergerät (20) zur Bremsdruckmodulation umfasst, **dadurch gekennzeichnet, dass** in dem Steuergerät (20) ein Verfahren gemäß einem der Ansprüche 1 bis 9 durchgeführt wird.

## Claims

1. Method for pressure modulation of brake pressures in a motorcycle braking system with anti-lock function and with integral brake function, in which motorcycle braking system in each case inlet and outlet valves (9, 10) are provided for brake slip regulation in a front wheel brake circuit (1) and a rear wheel brake circuit (2), and with it being possible by means of the integral brake function for an active pressure build-up in a brake circuit other than that actuated by the motorcycle rider to be carried out by means of a pump (15) and at least in each case one separating and switching valve (11, 18) in at least one of the brake circuits (1, 2), with the separating valve (11) being arranged between the master brake cylinder (3, 4) of the brake circuit (1, 2) and the pressure side of the pump (15) and with the switching valve (18) being arranged between the master brake cylinder (3, 4) and the suction side of the pump (15), **characterized in that**, in the brake circuit (1, 2) which is braked by the integral function, during a brake slip regulation a brake pressure modulation is controlled or regulated by means of the switching valve (18) and/or the separating valve (11).

2. Method according to Claim 1, **characterized in that** the type of brake pressure modulation in the brake circuit (1, 2) which is braked by the integral function takes place as a function of a slip of a wheel (VR, HR), in particular the slip of the wheel braked by the integral function.

3. Method according to Claim 1 or 2, **characterized in that**, during a brake slip regulation in the brake circuit (1, 2) which is braked by the integral function, in order to hold the brake pressure, the switching valve (18) is closed.

4. Method according to at least one of Claims 1 to 3, **characterized in that**, during a brake slip regulation in the brake circuit (1, 2) which is braked by the integral function, in order to dissipate the brake pressure, the separating valve (11) is opened, in particular partially opened.

5. Method according to Claim 3 or 4, **characterized in that**, after the brake pressure has been held or dissipated, in order to build up the brake pressure, the separating valve (11) is closed and the switching valve (18) is opened.

6. Method according to at least one of Claims 1 to 5, **characterized in that**, during a brake slip regulation in the brake circuit (1, 2) which is braked by the integral function, the brake pressure modulation by means of the switching and/or separating valve (11, 18) is ended and brake pressure modulation by means of the inlet and outlet valves (9, 10) is carried out if the braking operation is a critical one.

7. Method according to Claim 6, **characterized in that** an identification of a critical braking operation takes place as a function of the behaviour of the motorcycle rider or as a function of vehicle operating parameters, in particular the slip of a wheel (HR, VR).

8. Method according to Claim 7, **characterized in that** a critical braking operation is identified if the slip of a wheel is greater than a threshold value predefined within the anti-lock function.

9. Method according to at least one of Claims 1 to 8, **characterized in that** the brake slip regulation in which a brake pressure modulation is controlled or regulated by means of the switching valve (18) and/or the separating valve (11) is a regulation for electronic brake force distribution.

10. Motorcycle braking system with an anti-lock system and with an integral brake function, in which motorcycle braking system in each case inlet and outlet valves (9, 10) are provided for brake slip regulation in a front wheel brake circuit (1) and a rear wheel brake circuit (2), and with it being possible by means of the integral brake function for an active pressure build-up in a brake circuit other than that actuated by the motorcycle rider to be carried out by means of a pump (15) and at least in each case one separating and switching valve (11, 18) in at least one of the brake circuits (1, 2), with the separating valve (11) being arranged between the master brake cylinder (3, 4) of the brake circuit (1, 2) and the pressure side of the pump (15) and with the switching valve (18) being arranged between the master brake cylinder (3, 4) and the suction side of the pump (15), and which motorcycle braking system comprises an electronic control unit (20) for brake pressure modulation, **characterized in that** a method according to one of Claims 1 to 9 is carried out in the control unit (20).

## Revendications

1. Procédé de modulation de la pression de freinage dans une installation de freinage de moto à fonction antiblocage et fonction de freinage intégral dans laquelle des soupapes d'admission et des soupapes de sortie (9, 10) sont prévues dans un circuit (1) de freinage de la roue avant et dans un circuit (2) de freinage de la roue arrière pour réguler le patinage au freinage,
l'établissement actif d'une pression dans un circuit de freinage autre que celui actionné par le conducteur de la moto étant exécuté par la fonction de freinage intégral au moyen d'une pompe (15) et d'au moins une soupape de séparation et une soupape d'inversion (11, 18) dans au moins l'un des circuits de freinage (1, 2),
la soupape de séparation (11) étant disposée entre le cylindre principal de frein (3, 4) du circuit de freinage (1, 2) et le côté sous pression de la pompe (15) et la soupape d'inversion (18) entre le cylindre principal de frein (3, 4) et le côté aspiration de la pompe (15),
**caractérisé en ce que**
lors d'une régulation du patinage au freinage, une modulation de la pression de freinage est commandée ou régulée par l'intermédiaire de la soupape d'inversion (18) et/ou de la soupape de séparation (11) dans le circuit de freinage (1, 2) qui est freiné par la fonction intégrale.

2. Procédé selon la revendication 1, **caractérisé en ce que** le mode de modulation de la pression de freinage dans le circuit de freinage (1, 2) qui est freiné par la fonction intégrale est fonction du patinage d'une roue (VR, HR) et en particulier du patinage de la roue freinée par la fonction intégrale.

3. Procédé selon les revendications 1 ou 2, **caractérisé en ce que** lors d'une régulation du patinage au freinage dans le circuit de freinage (1, 2) qui est freiné par la fonction intégrale, la soupape d'inversion (18) est fermée pour maintenir la pression de freinage.

4. Procédé selon au moins l'une des revendications 1 à 3, **caractérisé en ce que** lors d'une régulation du patinage au freinage dans le circuit de freinage (1, 2) freiné par la fonction intégrale, la soupape de séparation (11) est ouverte et en particulier ouverte partiellement pour diminuer la pression de freinage.

5. Procédé selon les revendications 3 ou 4, **caractérisé en ce qu'**après le maintien ou la diminution de la pression de freinage, la soupape de séparation (11) est fermée et la soupape d'inversion (18) est ouverte pour rétablir la pression de freinage.

6. Procédé selon au moins l'une des revendications 1 à 5, **caractérisé en ce que** lors d'une régulation du patinage au freinage dans le circuit de freinage (1, 2) qui est freiné par la fonction intégrale, la modulation de la pression de freinage au moyen de la soupape d'inversion et/ou de la soupape de séparation (11, 18) est interrompue et une modulation de la pression de freinage est effectuée à l'aide des soupapes d'admission et de sortie (9, 10) s'il s'agit d'un freinage critique.

7. Procédé selon la revendication 6, **caractérisé en ce que** la détection d'un freinage critique s'effectue en fonction du comportement du conducteur de la moto ou en fonction de paramètres de fonctionnement du véhicule et en particulier du patinage d'une roue (HR, VR).

8. Procédé selon la revendication 7, **caractérisé en ce qu'**un freinage critique est détecté si le patinage d'une roue est supérieur à une valeur de seuil prédéterminée dans le cadre de la fonction antiblocage.

9. Procédé selon au moins l'une des revendications 1 à 8, **caractérisé en ce que** la régulation du patinage au freinage pour laquelle une modulation de la pression de freinage est commandée ou régulée par l'intermédiaire de la soupape d'inversion (18) et/ou de la soupape de séparation (11) est une régulation en vue d'une répartition électronique de la force de freinage.

10. Installation de freinage de moto dotée d'un système antiblocage et d'une fonction de freinage intégral,
dans laquelle une soupape d'admission et une soupape de sortie (9, 10) sont prévues pour la régulation du patinage au freinage dans un circuit (1) de freinage de la roue avant et un circuit (2) de freinage de la roue arrière,
l'établissement actif d'une pression dans un circuit de freinage autre que celui actionné par le conducteur de la moto étant exécuté par la fonction de freinage intégral au moyen d'une pompe (15) et d'au moins une soupape de séparation et une soupape d'inversion (11, 18) dans au moins l'un des circuits de freinage (1, 2),
la soupape de séparation (11) étant disposée entre le cylindre principal de frein (3, 4) du circuit de freinage (1, 2) et le côté sous pression de la pompe (15) et la soupape d'inversion (18) entre le cylindre principal de frein (3, 4) et le côté aspiration de la pompe (15),
et comprenant un appareil électronique de commande (20) qui assure la modulation de la pression de freinage,
**caractérisée en ce que**
un procédé selon l'une des revendications 1 à 9 est exécuté dans l'appareil de commande (20).
